# EUROPEAN PATENT SPECIFICATION

(11) **EP 2 353 941 B1**
(45) Date of publication and mention of the grant of the patent: **19.06.2013**
(21) Application number: 09825911.2
(22) Date of filing: 12.11.2009
(51) Int. Cl.: B60R 16/02, B60R 16/023, H02M 7/48, H04L 25/02

(54) **VEHICLE COMMUNICATION CONTROL DEVICE**
KOMMUNIKATIONSSTEUERUNGSVORRICHTUNG FÜR EIN FAHRZEUG
DISPOSITIF DE COMMANDE DE COMMUNICATION DE VÉHICULE

(30) Priority: 12.11.2008 JP 2008290112
(43) Date of publication of application: 10.08.2011
(73) Proprietor: Sanden Corporation, Isesaki-shi Gunma 372-8502 (JP)
(72) Inventor: KUROSAKI, Kei, Isesaki-shi Gunma 372-8502 (JP)
(74) Representative: Prüfer & Partner GbR European Patent Attorneys
(86) International application number: PCT/JP2009/006031
(87) International publication number: WO 2010/055657

(56) References cited:
- JP-A- 3 022 821
- JP-A- 10 014 098
- JP-A- 2006 221 485
- JP-A- 2007 137 299
- JP-A- 2008 017 595
- JP-A- 2008 017 595
- US-A- 6 088 244

## Description

### Technical Field of the Invention

The present invention relates to a vehicle communication control device, and specifically, to a vehicle communication control device required for which an insulation boundary is configured between a low-voltage region and a high-voltage region when a control signal sent from a host controller to the low-voltage region by communication is sent to an operation control device for an electric equipment mounted on a vehicle through a microcomputer disposed in the high-voltage region.

### Background Art of the Invention

A technology is known wherein, in order to control an electric equipment mounted on a vehicle, for example, a motor for driving an electric compressor used in an air conditioning system for a vehicle, a direct current supplied from a direct current power source (for example, a high voltage source) is converted into a pseudo alternate current (for example, a three-phase alternate current) by an inverter having a plurality of switching elements and gate driving circuits, and the pseudo alternate voltage is applied to the motor to control the motor. A communication system is also known wherein for the control of this inverter as an operation control device for a motor, for example, a microcomputer for control is used, and to this microcomputer, a demand signal for control is sent from a host controller (for example, an ECU (Electronic Control Unit) mounted on a vehicle capable of performing a centralized control of respective portions of the vehicle).

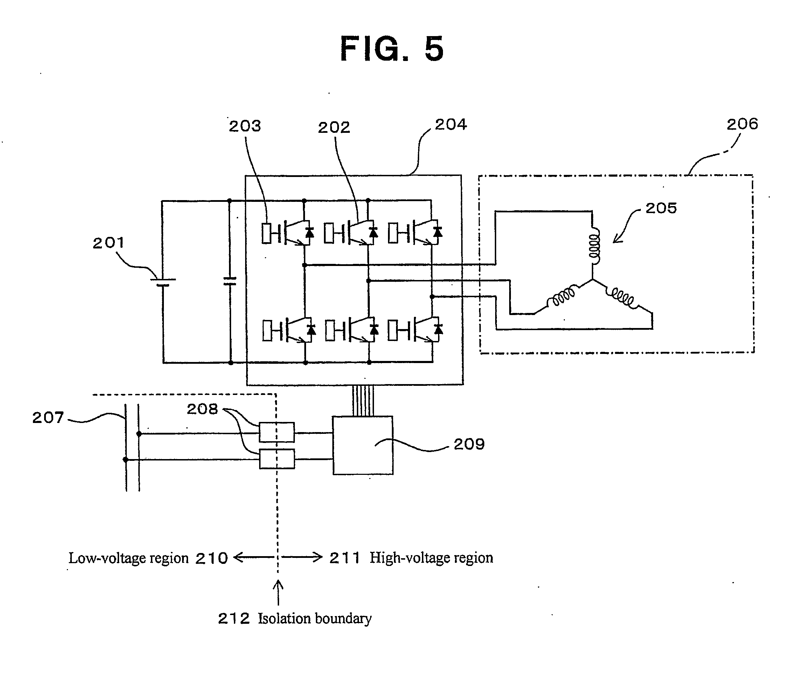

Such a system is constituted, for example, as shown in Fig. 5. A direct current supplied from a high-voltage power source 201 is converted into a pseudo alternating current by an inverter 204 having a plurality of switching elements 202 and gate drive circuits 203, and the alternating current is supplied to a motor 205 to drive an electric compressor 206. A demand signal sent from a host controller (not shown) through a communication bus 207 is transmitted to a microcomputer for control 209, for example, through photocouplers 208 as insulation elements, respective gate drive circuits 203 of respective switching elements 202 are controlled by the demand signals from microcomputer for control 209, and the voltage of the alternating current supplied to motor 205 is controlled. Usually, the parts from communication bus 207 to photocouplers 208 are disposed in a low-voltage region 210, the parts in the side from photocouplers 208 to microcomputer for control 209, inverter 204 and motor 205 are disposed in a high-voltage region 211 because the motor is required to be driven by a high voltage, the boundary between both voltage regions 210, 211 is formed as an insulation boundary 212, and photocouplers 208 are disposed on the portion of this insulation boundary 212. A similar system is disclosed also in Patent document 1.

Recently, a communication protocol high in communication speed such as CAN (Controller Area Network) [LAN in vehicle] has been employed. In case employing such a high-speed communication bus, however, in a conventional structure as shown in Fig. 5 (or as shown in Patent document 1), although a high-speed communication bus (CAN bus) 207 and a microcomputer for control 209 are to be directly connected by a photocoupler 208, because a photocoupler for high-speed communication does not exist at the present circumstances, a response delay of photocoupler 208 occurs, a delay of communication occurs, and therefore, it is difficult to ensure communication reliability. Namely, photocoupler 208 is not suitable for a high-speed signal, and a high-speed communication and signal transmission basically cannot be performed.

For such problems, in a CAN communication circuit or a signal isolation circuit between low voltage and high voltage, an insulation means enabling a high-speed signal insulation in high-speed communication is sold on the market, for example, as a digital isolator (for example, "i coupler" produced by Analog Devices Corporation).

### Prior art documents

### Patent documents

Patent document 1: JP-A-2008-017595

### Summary of the Invention

### Problems to be solved by the Invention

However, in a circuit using a digital isolator for high-speed signal isolation as described above, there is a problem that the operation of the digital isolator becomes unstable when the power supply voltage varies due to turning on of the power, a power interrupt, etc., in particular, when the power supply voltage reduces. Namely, in a circuit using a digital isolator for high-speed signal transmission (a communication circuit of LAN in vehicle or a signal insulation circuit between low voltage and high voltage), when a voltage of low-voltage side reduces or a voltage of high-voltage side reduces at the time such as turning on of the power or a power interrupt, the operation of the digital isolator becomes unstable. As the mechanism of this unstable operation, the unstable operation is considered to happen because, in a region of the minimum operation voltage of the digital isolator or less, a logic operation decided by a threshold voltage of a logic circuit provided inside (CMOS logic circuit [PMOS and NMOS transistor]) is not performed correctly. This phenomenon appears as an unstable output logic when even any one of the signal input-side voltage and the signal output-side voltage reduces down to a value out of each normal operation voltage range. Namely, it is considered because in these voltage regions the state of an inputted logic is not correctly processed in the inside logic circuit.

Accordingly, in a vehicle communication control device for which an isolation boundary equipped with a signal isolation means, in particular, a digital isolator, is configured between a high-voltage region and a low-voltage region, an object of the present invention is to enable to prevent erroneous output from the signal isolation means and perform vehicle communications and microcomputer control correctly when the varied voltage reduces down to a value out of a predetermined range, in particular, the power supply voltage reduces due to turning on of the power, a power interrupt, etc. during use of the signal insulation means for insulating a high-speed signal.

### Means for solving the Problems

To achieve the above-described object, a vehicle communication control device according to the present invention for which an isolation boundary equipped with a signal isolation means is configured between (a) a microcomputer which is disposed in a high-voltage region supplied with a relatively high voltage and which controls an operation control signal sent to an operation control device for an electric equipment mounted on a vehicle that is provided in the high-voltage region and (b) a signal transmission/reception means which is disposed in a low-voltage region supplied with a relatively low voltage and which receives a control signal sent from a host controller, sends the received control signal toward the microcomputer, receives a signal sent from the microcomputer side, and sends the received signal toward the host controller side, is characterized in that the signal isolation means is provided with a voltage monitoring means for monitoring a variation of voltage in a high-voltage side and/or a low-voltage side of the signal isolation means, and an erroneous output prevention means capable of controlling an output, which is from the signal isolation means to the high-voltage side and/or the low-voltage side of the signal isolation means, to a predetermined safe output or an output within a predetermined safety range when a voltage detected by the voltage monitoring means with respect to variation is reduced down to a value out of a predetermined range. This structure according to the present invention is particularly effective for a case where the signal isolation means includes a digital isolator for high-speed signal isolation.

In a vehicle communication control device using a high-speed signal isolation means, in particular, a digital isolator for high-speed signal isolation, as aforementioned, at the time of turning on, power interrupt, etc. of a low-voltage side or a high-voltage side, in particular, when the power source voltage reduces exceeding a predetermined range, the operation of the digital isolator for high-speed signal isolation becomes unstable, an erroneous signal is outputted to a CAN bus or a microcomputer, and an inconvenience may occur such as that the other ECU or the whole of the bus becomes impossible to be communicated or that the microcomputer recognize the signal incorrectly. In the present invention, in a CAN bus circuit or a signal insulation circuit between low voltage and high voltage which uses a digital isolator for high-speed signal isolation, respective power source voltages of the low-voltage said and the high-voltage side (for example, 5V for control circuits) are monitored by the voltage monitoring means, when any one of the monitored voltages reduced lower than a predetermined voltage (for example, 4V), the output logic of the digital isolator for high-speed signal isolation of any one of the low-voltage side and the high-voltage side, preferably, of both the low-voltage side and the high-voltage side, can be fixed to a predetermined safe output or can be controlled to an output within a predetermined safety range by the erroneous output prevention means. Namely, to the erroneous output prevention means, a logic circuit having such a function, that is, a logic circuit capable of controlling an output, which is from the signal isolation means to the high-voltage side and/or the low-voltage side of the signal isolation means, to a predetermined safe output or an output within a predetermined safety range may be provided. Further, to the erroneous output prevention means, a pull-up resistance or a pull-down resistance, capable of fixing a voltage of detection target to a predetermined voltage by pulling up or pulling down the voltage of detection target when a voltage detected by the voltage monitoring means is reduced down to a value out of a predetermined range, may also be provided. Furthermore, in case where an input signal-side logic circuit or an output signal-side logic circuit is provided in the digital isolator for high-speed signal isolation, it is also possible to give the function of the logic circuit for output control as the above-described erroneous output prevention means to these inside logic circuits. By such a structure, for example, by structuring the erroneous output prevention means comprising a logic circuit with a function for fixing to a high impedance and the like and a pull-up resistance or by structuring the erroneous output prevention means utilizing an output enabling function (function for fixing the output logic to a high impedance and the like) provided to the output side in the digital isolator for high-speed signal isolation, and by operating the erroneous output prevention means, it becomes possible not to generate an erroneous output from the digital isolator for high-speed signal isolation. In particular, by monitoring both voltages of the low-voltage side and the high-voltage side, it becomes possible to prevent an erroneous output regardless of initiation order or stop order of the low-voltage side and the high-voltage side at the time of turning on or interruption of the power source.

The above-described digital isolator for high-speed signal isolation may be formed so as to include a digital isolator having a transformer insulating between the high-voltage side and the low-voltage side, an input signal-side logic circuit provided as an interface and connected to a primary side when a low-voltage side of the transformer is referred to as the primary side, an encoder for converting an input logic due to the input signal-side logic circuit into a pulse signal, a decoder connected to a high-voltage secondary side of the transformer for converting an output logic into an analog signal, and an output signal-side logic circuit provided as an interface for outputting an output logic due to the decoder. Alternately, the above-described digital isolator for high-speed signal isolation may be formed so as to include a digital isolator having a transformer insulating between the high-voltage side and the low-voltage side, an input signal-side logic circuit provided as an interface and connected to a primary side when a high-voltage side of the transformer is referred to as the primary side, an encoder for converting an input logic due to the input signal-side logic circuit into a pulse signal, a decoder connected to a low-voltage secondary side of the transformer for converting an output logic into an analog signal, and an output signal-side logic circuit provided as an interface for outputting an output logic due to the decoder. In particular, it is preferred to form a combined isolator functioning in both directions. In such a structure, in case where the logic circuit present in the output side has an output enabling function, as described above, the output logic can be fixed to a high impedance by controlling the logic of an input terminal for output enabling control present in the output side utilizing that function. However, since it is effective only within an operation possible voltage range and the output logic becomes unstable in a range out of the operation possible voltage range, it is required to be careful.

Further, in the vehicle communication control device according to the present invention, the signal isolation means may be structured so as to include an element for low-speed signal isolation in addition to the above-described digital isolator for high-speed signal isolation. As the element for low-speed signal isolation, for example, a photocoupler can be used. In case where a signal to be transmitted includes a high-speed signal and a low-speed signal, because there is no remarkable problem even if the photocoupler is used for the low-speed signal, such a structure is possible.

Further, as described above, it is preferred that the erroneous output prevention means includes a logic circuit capable of controlling an output, which is from the signal isolation means to the high-voltage side and/or the low-voltage side of the signal isolation means, to a predetermined safe output or an output within a predetermined safety range. Further, as described above, a structure may be employed wherein the erroneous output prevention means includes a pull-up resistance or a pull-down resistance capable of fixing a voltage of detection target to a predetermined voltage by pulling up or pulling down the voltage of detection target when a voltage detected by the voltage monitoring means is reduced down to a value out of a predetermined range.

Further, in the vehicle communication control device according to the present invention, a structure may be employed wherein a control signal is sent from the host controller (for example, an electronic control unit for a vehicle: vehicle ECU) to the above-described signal transmission/reception means through the CAN bus. In this case, a structure may be employed wherein a control signal is sent from the side of a CAN transceiver as the signal transmission/reception means to the host controller through the CAN bus. By providing the CAN transceiver and using the mode control function of the CAN transceiver, even if an erroneous signal is outputted from the side of the digital isolator for high-speed signal isolation to the side of the CAN bus, further to the side of the host controller, it becomes possible to stop it at the portion of this CAN transceiver so as not to allow it to go out of the device, and so as to prevent that a bad influence is given to other communication devices.

As also shown in the embodiments described later, the present invention is suitable particularly for a case where the above-described electric equipment mounted on a vehicle comprises a motor for driving an electric compressor, and the operation control device for the electric equipment mounted on a vehicle comprises an inverter. However, the present invention can be applied for other electric equipment mounted on a vehicle, and for example, can be applied a case where the above-described operation control device for an electric equipment mounted on a vehicle comprises one selected from the group consisting of an inverter for driving vehicle wheels, an operation control device for an electric power steering, a buttery control device and a DC-DC converter.

Further, as the host controller, although not particularly limited, for example, an electronic control unit (ECU) capable of performing a centralized control of respective portions of a vehicle can be raised.

### Effect according to the Invention

Thus, in the vehicle communication control device according to the present invention, at the time of using a high-speed signal insulation means, in particular, a digital isolator for high-speed signal insulation, when the voltage reduces exceeding a predetermined range, for example when the power source voltage reduces at the time of turning on or interruption of power source, an erroneous output can be prevented from occurring, and vehicle communication and control by microcomputer can be performed correctly.

### Brief explanation of the drawings

[Fig. 1] Fig. 1 is a block diagram showing an example of a basic structure of a vehicle communication control device according to the present invention.
[Fig. 2] Fig. 2 is a schematic circuit diagram showing an example of a basic structure of a digital isolator for high-speed signal isolation used in a vehicle communication control device according to the present invention.
[Fig. 3] Fig. 3 is a circuit diagram showing an example of a more concrete structure of a vehicle communication control device according to the present invention.
[Fig. 4] Fig. 4 is a circuit diagram showing an example of a structure of a combined isolator and its vicinity in the example depicted in Fig. 3.
[Fig. 5] Fig. 5 is a circuit diagram showing an example of a conventional vehicle communication control device.

### Embodiments for carrying out the Invention

Hereinafter, desirable embodiments of the present invention will be explained referring to figures.

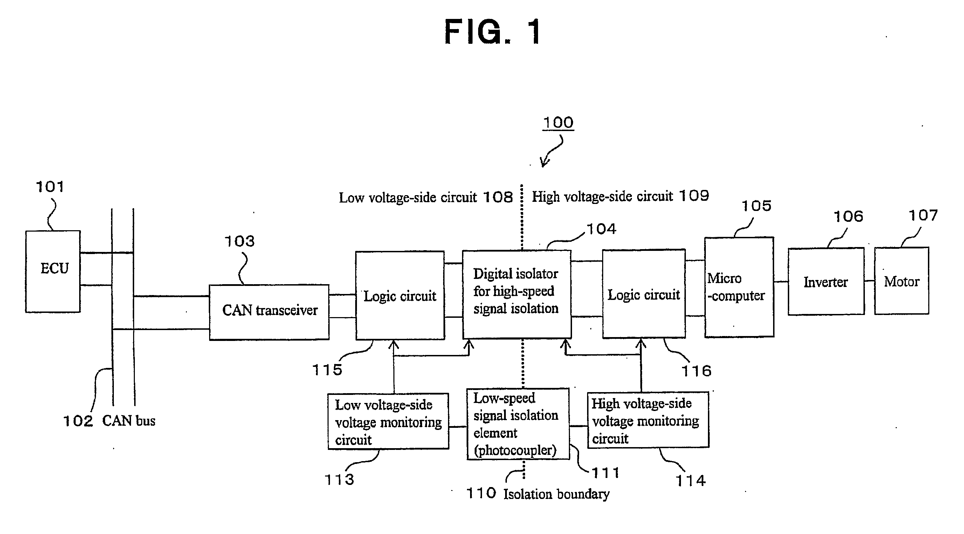

Fig. 1 shows an example of a basic structure of a vehicle communication control device according to the present invention, and in particular, shows a case where control of a motor mounted on a vehicle is performed via an inverter having switching elements (power semiconductor elements). In a vehicle communication control device 100 shown in Fig. 1, a control signal from a vehicle ECU 101 as a host controller is received by a CAN transceiver 103 through CAN bus 102, and therefrom, the control signal is sent to a motor 107 through a digital isolator for high-speed signal isolation 104 as a high-speed signal isolation means, a microcomputer 105 and an inverter 106. Digital isolator for high-speed signal isolation 104 is disposed on an isolation boundary 110 configured between a low-voltage side circuit 108 and a high-voltage side circuit 109, and in the example shown in the figure, a photocoupler 111 as a low-speed signal isolation element is also provided on this isolation boundary 110. For digital isolator for high-speed signal isolation 104, a low voltage-side voltage monitoring circuit 113 and a high voltage-side voltage monitoring circuit 114 capable of monitoring the variation of voltages in the low-voltage side and high-voltage side of the digital isolator for high-speed signal isolation 104 are provided. Between digital isolator for high-speed signal isolation 104 and CAN transceiver 103, disposed are a low voltage-side logic circuit 115 and a high voltage-side logic circuit 116 forming a part of an erroneous output prevention means capable of controlling an output, which is from digital isolator 104 to the high-voltage side and/or the low-voltage side of the digital isolator 104, to a predetermined safe output or an output within a predetermined safety range when the voltage detected by voltage monitoring circuits 113 or 114 with respect to variation is reduced down to a value out of a predetermined range. From low voltage-side voltage monitoring circuit 113, based on the monitored voltage, an operation signal is sent to low voltage-side logic circuit 115 and the low voltage-side circuit in digital isolator 104, and from high voltage-side voltage monitoring circuit 114, based on the monitored voltage, an operation signal is sent to high voltage-side logic circuit 116 and the high voltage-side circuit in digital isolator 104.

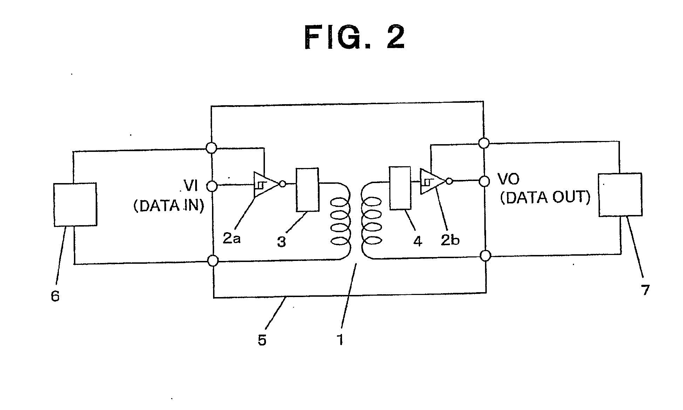

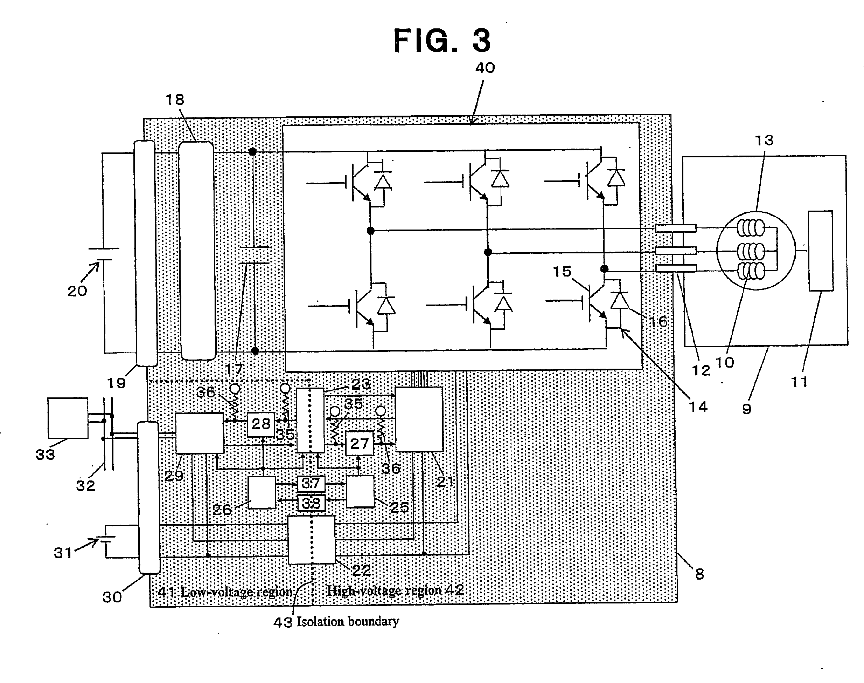

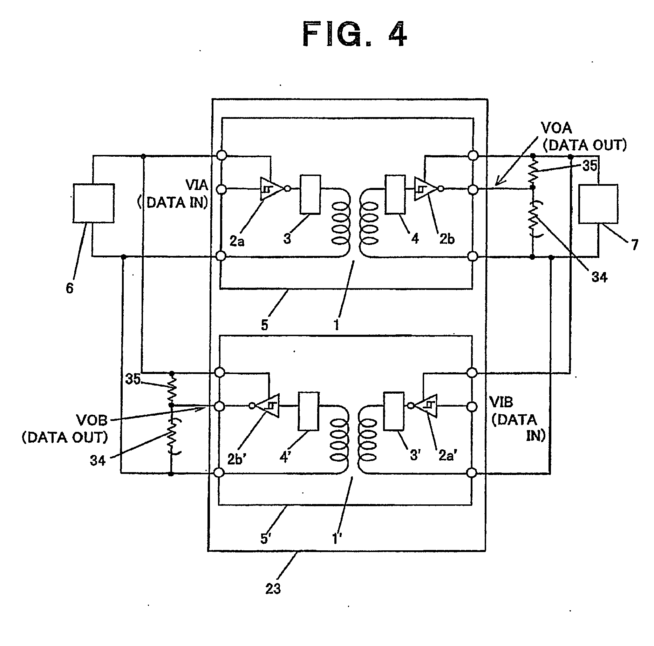

The above-described digital isolator for high-speed signal isolation 104 is basically formed, for example, as a digital isolator 5 whose schematic structure is shown in Fig. 2. However, in a more concrete embodiment of the present invention shown in Fig. 3 described later, it is structured as a combined isolator in both directions as shown in Fig. 4 (this will be described later). In the example shown in Fig. 2, symbol 1 indicates a transformer, and an isolation boundary is formed between the high-voltage side and the low-voltage side. Symbol 2a indicates an input signal-side logic circuit as an interface which is provided in the low-voltage primary side of transformer 1, symbol 3 indicates an encoder for converting an input logic due to input signal-side logic circuit 2a into a pulse signal, symbol 4 indicates a decoder for converting the output logic into an analog signal which is provided in the high-voltage secondary side of transformer 1, and symbol 2b indicates an output signal-side logic circuit as an interface for outputting the output logic due to decoder 4, respectively. Symbol 6 indicates a low voltage-side control power source, and symbol 7 indicates a high voltage-side control power source, respectively. Input signal-side logic circuit 2a and output signal-side logic circuit 2b are formed , for example, from a CMOS logic circuit (Schmitt trigger).

The above-described digital isolator 5 performs signal transmission and isolation by combining magnetism, capacity, etc. of transformer 1, a capacitor, GMR element, etc. between the primary side and the secondary side. In digital isolator 5 shown in the above (insulation by transformer 1), the respective coils are connected to the respective CMOS logic circuits 2a, 2b, and interface is performed between each coil of transformer and an external signal. The input logic is converted into a pulse by encoder 3, and inputted to the primary side of transformer 1. This pulse is transmitted to the secondary side by magnetic combination, and the state of the input logic is regenerated as an output logic. Where, as aforementioned, as digital isolator 5, there is one having an output enabling function, and by this function, the output logic can be fixed to a high impedance by controlling the logic of an input terminal for output enabling control. However, it is effective only with an operation possible voltage range, and there is a possibility that the output logic becomes unstable in a range out of the operation voltage range. Further, it can be fixed to a high level by connecting, for example, a pull-up resistance 35 (shown in Fig. 3) to an output terminal VO.

Fig. 3 shows a more concrete circuit structure of the vehicle communication control device according to the present invention. In the embodiment shown in Fig. 3, power is supplied to a motor drive and control circuit 8 from a high voltage-side battery 20 through a connector 19, and in motor drive and control circuit 8, after the power is converted into a pseudo three-phase current for driving a motor through a noise filter 18 and a flattening capacitor 17 and via an inverter 40, it is supplied to respective motor coils 10 of a built-in motor 13 operating a compression mechanism 11 of an electric compressor 9 through sealed terminals 12.Each power semiconductor element 14 of inverter 40 comprises IGBT (15) and a reflux diode 16. Noise filter 18 comprises a coil and capacitor provided inside. From a low voltage-side battery 31, power is supplied a power source circuit 22 formed using an insulation transformer, via a connector for control signal 30. Power source circuit 22 generates a low voltage-side control power source in a low-voltage region 41, a high voltage-side control power source in a high-voltage region 42 and a power source for driving a power semiconductor element. An insulation boundary 43 is configured between low-voltage region 41 and high-voltage region 42.

The control signal from vehicle ECU 33 as a host controller is received by CAN transceiver 29 through CAN bus 32 as a vehicle inside LAN and connector 30 for control signal, and therefrom, the control signal is sent to microcomputer 21 through combined isolator 23 for high-speed signal isolation formed by combining two aforementioned digital isolators 5 which is disposed on isolation boundary 43 as a high-speed signal isolation means, and inverter 40 is controlled by the control signal processed by microcomputer 21.

The above-described combined isolator 23 is structured, for example, as shown in Fig. 4. In combined isolator 23 shown in Fig. 4, in addition to digital isolator 5 shown in Fig. 2, a digital isolator 5' whose input side and output side are set in the opposite directions is combined, and also in the side of digital isolator 5', an isolation boundary between the high-voltage side and the low-voltage side is configured. Symbol 2a' indicates an input signal-side logic circuit as an interface which is provided in the high-voltage primary side of transformer 1', symbol 3' indicates an encoder for converting an input logic due to input signal-side logic circuit 2a' into a pulse signal, symbol 4' indicates a decoder for converting the output logic into an analog signal which is provided in the low-voltage secondary side of transformer 1', and symbol 2b' indicates an output signal-side logic circuit as an interface for outputting the output logic due to decoder 4', respectively. In the embodiment shown in the figure, although pull-up resistances 35 for pulling up the voltages at the output sides of digital isolator 5 and digital isolator 5' to predetermined values are provided, it is possible to provide pull-down resistances 34 for pulling down the voltages to predetermined values.

To explain referring again to Fig. 3, in this embodiment, photocoupler A (37) and photocoupler B (38) as low-speed signal insulation means are also provided on insulation boundary 43. A low voltage-side voltage monitoring circuit 26 including a voltage detection circuit is provided in low-voltage region 41, and a high voltage-side voltage monitoring circuit 25 including a voltage detection circuit is provided in high-voltage region 42, respectively. A low voltage-side logic circuit 28 forming a part of the erroneous output prevention means is connected between CAN bus 32 and combined isolator 23, and a high voltage-side logic circuit 27 forming a part of the erroneous output prevention means is connected between combined isolator 23 and microcomputer 21, respectively. On the both sides relative to respective low voltage-side logic circuit 28 and high voltage-side logic circuit 27, pull-up resistances A (35) and pull-up resistances B (36) are disposed.

CAN transceiver 29 sends and outputs the digital signal inputted from microcomputer 21 (CAN controller) to CAN bus 32 as an operating level signal. The state of the operating level of CAN bus 32 is outputted to microcomputer 21 (CAN controller) as a digital signal (normal-mode operation). There is a product having a mode control function (normal mode, stand-by mode, etc.) as CAN transceiver 29, and at the stand-by mode, regardless of the input logic, a dominant output to CAN bus 32 can be stopped. In this mode control function of CAN transceiver 29, the above-described operation is performed at the normal mode among the mode conditions of CAN transceiver 29. At the stand-by mode, it can be performed to invalidate the input logic sent from microcomputer 21 and the input logic at the level of CAN bus 32 and to fix the output logic to CAN bus 32 at a recessive level. However, it is effective only within the operation possible voltage range, and there is a possibility that the output level becomes unstable in a range out of the operation possible voltage range. There are dominant level and recessive level in the level of CAN bus 32, and if the dominant level is continued to be outputted, the bus is occupied and the communication becomes impossible. In this case, the dominant level is preferential, and the recessive level is receptive.

In the control of an electric equipment mounted on a vehicle, in case where high-speed communication and high-speed signal transmission are performed between electric potentials electrically insulated from each other, it is possible carry out those using the above-described combined isolator 23. As aforementioned, however, the operation of combined isolator 23 becomes unstable when the power source voltage reduces due to turning on or interruption of a low voltage-side control power source or a high voltage-side control power source, and there is a fear that an erroneous signal is outputted to a LAN in a vehicle (CAN bus 32) or microcomputer 21 and vehicle-side ECU 33 or the hole of CAN bus 32 becomes impossible in communication, or that microcomputer 21 recognizes the signal incorrectly and a normal operation becomes impossible. In order to solve such a problem, it becomes possible to prevent an erroneous signal due to combined isolator 23 from being sent to the vehicle LAN (CAN bus 32) or microcomputer 21 by monitoring the respective control power source voltages (for example, 5V power source voltage for control circuits, etc.) by low voltage-side voltage monitoring circuit 26 and high voltage-side voltage monitoring circuit 25, and fixing the output logic to a correct logic by the output-side logic circuit (for example, low voltage-side logic circuit 28 in case where the output of the low-voltage side is required to be fixed), the output enabling function of combined isolator 23 or the stand-by mode due to the mode control function of CAN transceiver 29, when any voltage is lowered than a certain threshold voltage (for example, 4V) within the normal operation voltage range of combined isolator 23.

Further, in the above-described embodiment, when the input-side voltage has reduced, the operation is performed so that the output-side logic is fixed to a correct logic through photocoupler A (37) or photocoupler B (38) at a condition where the output-side voltage of combined isolator 23 is within an operation voltage range. When the voltage monitored by high voltage-side voltage monitoring circuit 25 or low voltage-side voltage monitoring circuit 26 is lowered a predetermined voltage (for example, 4V) within the operation voltage range of combined isolator 23, by turning photocoupler A (37) or photocoupler B (38) to off condition, the output logic of high voltage-side logic circuit 27 or low voltage-side logic circuit 28 can be fixed to a correct logic.

Further, as to a case where the order of initiation or stop of the low-voltage side and the high-voltage side at the time of turning on or interruption of the power source is decided as follows, in a case where at the time of turning on of the power source, after the low voltage-side control power source is initiated within the operation voltage range of combined isolator 23 at a state where the high voltage-side power source is stopped, the high voltage-side control power source is initiated, and at the time of interruption of the power source, after the low voltage-side control power source is within the operation voltage range of combined isolator 23 and the high voltage-side control power source is lowered to a value of the operation voltage range of combined isolator 23 or lower and is stopped, the low voltage-side control power source is stopped, because photocoupler A (37) transmitting a signal from the low-voltage side to the high-voltage side becomes unnecessary, by the amount of this, decrease of the number of parts and cost down become possible.

On the contrary to the case described above, in a case where at the time of turning on of the power source, after the high voltage-side control power source is initiated within the operation voltage range of combined isolator 23 at a state where the low voltage-side power source is stopped, the low voltage-side control power source is initiated, and at the time of interruption of the power source, after the high voltage-side control power source is within the operation voltage range of combined isolator 23 and the low voltage-side control power source is lowered to a value of the operation voltage range of combined isolator 23 or lower and is stopped, the high voltage-side control power source is stopped, because photocoupler B (38) transmitting a signal from the high-voltage side to the low-voltage side becomes unnecessary, by the amount of this, decrease of the number of parts and cost down become possible.

Thus, by monitoring the voltages of both the low-voltage side and the high-voltage side, regardless of the order of initiation or stop of the low-voltage side and the high-voltage side at the time of turning on or interruption of the power source, an erroneous output can be prevented. However, even by voltage monitoring of any one of the low-voltage side and the high-voltage side, it is possible to prevent an erroneous output to a monitoring target voltage region.

### Industrial Applications of the Invention

The vehicle communication control device according to the present invention can be applied to control of any electric equipment mounted on a vehicle performing a high-speed signal communication, and in particular, suitable for a control of an electric compressor controlled by an inverter.

### Explanation of symbols

1, 1': transformer
2a, 2b, 2a', 2b': logic circuit in digital isolator
3, 3': encoder
4, 4': decoder
5, 5': digital isolator
6: low voltage-side control power source
7: high voltage-side control power source
8: motor drive circuit
9: electric compressor
10: motor coil
11: compression mechanism
12: sealed terminal
13: motor
14: power semiconductor element
15: IGBT
16: reflux diode
17: flattening capacitor
18: noise filter
19: connector
20: high voltage-side battery
21: microcomputer
22: power source circuit
23: combined isolator
25: high voltage-side voltage monitoring circuit
26: low voltage-side voltage monitoring circuit
27: high voltage-side logic circuit
28: low voltage-side logic circuit
29: CAN transceiver
30: connector for control signal
31: low voltage-side battery
32: CAN bus
33: vehicle ECU
34: pull-down resistance
35: pull-up resistance A
36: pull-up resistance B
37: photocoupler A
38: photocoupler B
40: inverter
41: low-voltage region
42: high-voltage region
43: insulation boundary
100: vehicle communication control device
101: vehicle ECU as host controller
102: CAN bus
103: CAN transceiver
104: digital isolator for high-speed signal isolation
105: microcomputer
106: inverter
107: motor
108: low voltage-side circuit
109: high voltage-side circuit
110: insulation boundary
111: photocoupler
113: low voltage-side voltage monitoring circuit
114: high voltage-side voltage monitoring circuit
115: low voltage-side logic circuit
116: high voltage-side logic circuit

## Claims

1. A vehicle communication control device (100) in which an isolation boundary equipped with a signal isolation means is configured between (a) a microcomputer (105; 21) which is disposed in a high-voltage region (42) supplied with a relatively high voltage and which controls an operation control signal sent to an operation control device for an electric equipment mounted on a vehicle that is provided in said high-voltage region and (b) a signal transmission/reception means (103; 29) which is disposed in a low-voltage region (41) supplied with a relatively low voltage and which is adapted to receive a control signal sent from a host controller (101; 33), sends the received control signal toward said microcomputer (105; 21), receives a signal sent from said microcomputer side, and sends the received signal toward said host controller side, **characterized in that** said signal isolation means includes a digital isolator for high-speed signal isolation (104) and is provided with a voltage monitoring means (113, 114; 25, 25) for monitoring a variation of a power source voltage in a high-voltage side and/or a low-voltage side of said signal isolation means, and an erroneous output prevention means capable of controlling an output, which is from said signal isolation means to said high-voltage side and/or said low-voltage side of said signal isolation means, to a predetermined safe output or an output within a predetermined safety range when a voltage detected by said voltage monitoring means (113, 114; 25, 25) with respect to variation is reduced down to a value out of a predetermined range.

2. The vehicle communication control device (100) according to claim 1, wherein said digital isolator for high-speed signal isolation (104) includes a digital isolator having a transformer (1) insulating between said high-voltage side and said low-voltage side, an input signal-side logic circuit (2a) provided as an interface and connected to a primary side when a low-voltage side of said transformer is referred to as said primary side, an encoder (3) for converting an input logic due to said input signal-side logic circuit (2a) into a pulse signal, a decoder (4) connected to a high-voltage secondary side of said transformer for converting an output logic into an analog signal, and an output signal-side logic circuit (2b) provided as an interface for outputting an output logic due to said decoder.

3. The vehicle communication control device (100) according to claim 1, wherein said digital isolator for high-speed signal isolation (104) includes a digital isolator having a transformer (1') insulating between said high-voltage side and said low-voltage side, an input signal-side logic circuit (2a') provided as an interface and connected to a primary side when a high-voltage side of said transformer is referred to as said primary side, an encoder (3') for converting an input logic due to said input signal-side logic circuit (2a') into a pulse signal, a decoder (4') connected to a low-voltage secondary side of said transformer for converting an output logic into an analog signal, and an output signal-side logic circuit (2b') provided as an interface for outputting an output logic due to said decoder.

4. The vehicle communication control device (100) according to any of claims 1 to 3, wherein said signal isolation means includes said digital isolator for high-speed signal isolation (104) and an element for low-speed signal isolation.

5. The vehicle communication control device (100) according to claim 4, wherein said element for low-speed signal isolation comprises a photocoupler (111).

6. The vehicle communication control device (100) according to any of claims 1 to 5, wherein said erroneous output prevention means includes a logic circuit (115, 116) capable of controlling an output, which is from said signal isolation means to said high-voltage side and/or said low-voltage side of said signal isolation means, to a predetermined safe output or an output within a predetermined safety range.

7. The vehicle communication control device (100) according to any of claims 1 to 6, wherein said erroneous output prevention means includes a pull-up resistance or a pull-down resistance capable of fixing a voltage of detection target to a predetermined voltage by pulling up or pulling down said voltage of detection target when a voltage detected by said voltage monitoring means is reduced down to a value out of a predetermined range.

8. The vehicle communication control device (100) according to any of claims 1 to 7, wherein the transmission/reception means is a CAN transceiver (29).

9. The vehicle communication control device (100) according to any of claims 1 to 8, wherein said electric equipment mounted on a vehicle comprises a motor (107; 13) for driving an electric compressor, and said operation control device for an electric equipment mounted on a vehicle comprises an inverter (106; 40).

10. The vehicle communication control device (100) according to any of claims 1 to 9, wherein said operation control device for an electric equipment mounted on a vehicle comprises one selected from the group consisting of an inverter (106; 40) for driving vehicle wheels, an operation control device for an electric power steering, a battery control device and a DC-DC converter.

## Patentansprüche

1. Fahrzeugkommunikationssteuervorrichtung (100), bei der eine Isolationsgrenze, die mit einer Signalisoliereinrichtung ausgestattet ist, konfiguriert ist zwischen (a) einem Mikrocomputer (105; 21), der in einem Hochspannungsbereich (42) angeordnet ist, der mit einer relativ hohen elektrischen Spannung versorgt wird und ein Betriebssteuersignal steuert, das zu einer Betriebssteuervorrichtung für ein elektrisches Gerät gesendet wird, das an einem Fahrzeug angebracht ist, welches in dem Hochspannungsbereich vorgesehen ist, und (b) einer Signalübertragungs/Aufnahmeeinrichtung (103; 29), die in einem Niederspannungsbereich (41) angeordnet ist, der mit einer relativ niedrigen elektrischen Spannung versorgt wird, und die daran angepasst ist, ein Steuersignal aufzunehmen, das von einer Hoststeuervorrichtung (101; 33) gesendet wird, das aufgenommene Steuersignal zu dem Mikrocomputer (105; 21) zu senden, ein von der Seite des Mikrocomputers gesendetes Signal aufzunehmen, und das aufgenommene Signal zu der Seite der Hoststeuervorrichtung zu senden, **dadurch gekennzeichnet, dass** die Signalisoliereinrichtung einen digitalen Isolator für eine Hochgeschwindigkeitssignalisolierung (104) aufweist und mit einer Spannungsüberwachungseinrichtung (113, 114; 25, 25) zum Überwachen einer Änderung einer Stromversorgungsspannung an einer Hochspannungsseite und/oder einer Niederspannungsseite der Signalisoliereinrichtung und einer Fehlerabgabeverhinderungseinrichtung versehen ist, die eine Abgabe steuern kann, die von der Signalisoliereinrichtung zu der Hochspannungsseite und/oder der Niederspannungsseite der Signalisoliereinrichtung stammt, und zwar zu einer vorbestimmten, sicheren Abgabe oder einer Abgabe innerhalb eines vorbestimmten Sicherheitsbereiches, wenn eine elektrische Spannung, die durch die Spannungsüberwachungseinrichtung (113, 114; 25, 25) erfasst wird, hinsichtlich einer Änderung auf einen Wert außerhalb eines vorbestimmten Bereiches reduziert wird.

2. Fahrzeugkommunikationssteuervorrichtung (100) gemäß Anspruch 1, wobei der digitale Isolator für die Hochgeschwindigkeitssignalisolation (104) einen digitalen Isolator aufweist, mit einem Transformator (1), der zwischen der Hochspannungsseite und der Niederspannungsseite isoliert, einer Logikschaltung (2a) an der Eingabesignalseite, die als eine Schnittstelle vorgesehen und mit einer Primärseite verbunden ist, wenn eine Niederspannungsseite des Transformators als eine Primärseite bezeichnet wird, einem Encoder (3) zum Umwandeln einer Eingabelogik aufgrund der Logikschaltung (2a) an der Eingabesignalseite zu einem Pulssignal, einem Decoder (4), der mit einer sekundären Hochspannungsseite des Transformators verbunden ist, um eine Abgabelogik zu einem analogen Signal umzuwandeln, und einer Logikschaltung (2b) an der Abgabesignalseite, die als eine Schnittstelle zum Abgeben einer Abgabelogik aufgrund des Decoders vorgesehen ist.

3. Fahrzeugkommunikationssteuervorrichtung (100) gemäß Anspruch 1, wobei der digitale Isolator für die Hochgeschwindigkeitssignalisolation (104) einen digitalen Isolator aufweist, mit einem Transformator (1'), der zwischen der Hochspannungsseite und der Niederspannungsseite isoliert, einer Logikschaltung (2a') an der Eingabesignalseite, die als eine Schnittstelle vorgesehen und mit einer Primärseite verbunden ist, wenn eine Hochspannungsseite des Transformators als die Primärseite bezeichnet wird, einem Encoder (3') zum Umwandeln einer Eingabelogik aufgrund der Logikschaltung (2a') an der Eingabesignalseite zu einem Pulssignal, einem Decoder (4'), der mit einer sekundären Niederspannungsseite des Transformators verbunden ist, um eine Abgabelogik zu einem analogen Signal umzuwandeln, und einer Logikschaltung (2b') an der Abgabesignalseite, die als eine Schnittstelle zum Abgeben einer Abgabelogik aufgrund des Decoders vorgesehen ist.

4. Fahrzeugkommunikationssteuervorrichtung (100) gemäß einem der Ansprüche 1 bis 3, wobei die Signalisoliereinrichtung den digitalen Isolator für die Hochgeschwindigkeitssignalisolation (104) und ein Element für eine Niedriggeschwindigkeitssignalisolation aufweist.

5. Fahrzeugkommunikationssteuervorrichtung (100) gemäß Anspruch 4, wobei das Element für die Niedriggeschwindigkeitssignalisolation einen Optokoppler (111) aufweist.

6. Fahrzeugkommunikationssteuervorrichtung (100) gemäß einem der Ansprüche 1 bis 5, wobei die Fehlerabgabeverhinderungseinrichtung eine Logikschaltung (115, 116) aufweist, die eine Abgabe, die von der Signalisolationseinrichtung stammt und zu der Hochspannungsseite und/oder der Niederspannungsseite der Signalisoliereinrichtung geht, zu einer vorbestimmten, sicheren Abgabe oder einer Abgabe innerhalb eines vorbestimmten Sicherheitsbereichs steuern kann.

7. Fahrzeugkommunikationssteuervorrichtung (100) gemäß einem der Ansprüche 1 bis 6, wobei die Fehlerabgabeverhinderungseinrichtung einen Pull-up-Widerstand oder einen Pull-down-Widerstand aufweist, der eine elektrische Spannung eines Erfassungsziels auf eine vorbestimmte elektrische Spannung durch Hochziehen oder Herunterziehen der elektrischen Spannung des Erfassungsziels fixieren kann, wenn eine durch die Spannungsüberwachungseinrichtung erfasste elektrische Spannung auf einen Wert außerhalb eines vorbestimmten Bereiches reduziert wird.

8. Fahrzeugkommunikationssteuervorrichtung (100) gemäß einem der Ansprüche 1 bis 7, wobei die Übertragungs/Aufnahmeeinrichtung ein CAN-Transceiver (29) ist.

9. Fahrzeugkommunikationssteuervorrichtung (100) gemäß einem der Ansprüche 1 bis 8, wobei das an einem Fahrzeug angebrachte elektrische Gerät einen Motor (107; 13) zum Antreiben eines elektrischen Verdichters aufweist, und wobei die Betriebssteuervorrichtung für ein an einem Fahrzeug angebrachtes elektrisches Gerät einen Wechselrichter (106; 40) aufweist.

10. Fahrzeugkommunikationssteuervorrichtung (100) gemäß einem der Ansprüche 1 bis 9, wobei die Betriebssteuervorrichtung für ein an einem Fahrzeug angebrachtes elektrisches Gerät jenes aufweist, das aus der Gruppe ausgewählt wird, die aus einem Wechselrichter (106; 40) zum Antreiben von Fahrzeugrädern, einer Betriebssteuervorrichtung für eine elektrische Servolenkung, einer Batteriesteuervorrichtung und einem DC/DC-Wandler besteht.

## Revendications

1. Dispositif de commande de communication (100) dans un véhicule dans lequel une limite de séparation équipée de moyens de séparation de signaux est conformée entre (a) un microcalculateur (105, 21) qui est monté dans une région haute tension (42) alimentée en une tension relativement élevée et qui commande un signal de commande d'opération transmis à un dispositif de commande d'opération pour un équipement électrique monté sur un véhicule qui est situé dans cette région haute tension, et (b) des moyens de transmission/réception de signaux (103, 29) qui sont montés dans une région basse pression (41) alimentée en une tension relativement faible et qui sont adaptés pour recevoir des signaux de commande transmis par un contrôleur hôte (101, 33), transmettent les signaux de commande reçus vers le microcalculateur (105, 21), reçoivent des signaux transmis par le microcalculateur et transmettent les signaux reçus au contrôleur hôte,
**caractérisé en ce que**
les moyens de séparation de signaux comportent un interrupteur-séparateur numérique permettant la séparation de signaux à haute vitesse (104) et sont équipés de moyens de surveillance de tension (113, 114, 25, 25) permettant de surveiller la variation d'une source de puissance du côté haute tension et/ou du côté basse tension des moyens de séparation de signaux, et de moyens de prévention d'une sortie erronée susceptibles de commander une sortie des moyens de séparation de signaux vers le côté haute pression et/ou le côté basse pression de ces moyens pour la transférer vers une sortie de sécurité prédéfinie ou une sortie située dans une plage de sécurité prédéfinie lorsque la variation de tension détectée par les moyens de surveillance de tension (113, 114, 25, 25) tombe à une valeur située à l'extérieur d'une plage prédéfinie.

2. Dispositif de commande de communication de véhicule (100) conforme à la revendication 1, dans lequel l'interrupteur-séparateur numérique permettant la séparation de signaux à haute vitesse (104) comporte un séparateur numérique muni d'un transformateur (1) permettant d'effectuer une séparation entre le côté haute tension et le côté basse tension, un circuit logique côté signal d'entrée (2a) réalisé sous la forme d'une interface et relié au côté primaire lorsque le côté basse tension du transformateur correspond au côté primaire, un codeur (3) pour transformer une sortie logique du circuit logique (2a) côté signal d'entrée en un signal d'impulsions, un décodeur (4) relié au côté secondaire haute tension du transformateur pour permettre de transformer une logique de sortie en un signal analogique et un circuit logique côté signal de sortie (2b) réalisé sous la forme d'une interface pour transmettre une logique de sortie correspondant au décodeur.

3. Dispositif de commande de communication de véhicule (100) conforme à la revendication 1, dans lequel l'interrupteur-séparateur numérique permettant la séparation de signaux haute vitesse (104) comporte un séparateur numérique muni d'un transformateur (1') permettant d'effectuer une séparation entre le côté haute tension et le côté basse tension, un circuit logique côté signal d'entrée (2a') réalisé sous la forme d'une interface est relié au côté primaire lorsque le côté haute tension du transformateur correspond au côté primaire, un codeur (3') pour transformer l'entrée logique du circuit logique côté signal d'entrée (2a') en un signal d'impulsions, un décodeur (4') relié au côté secondaire basse tension du transformateur pour permettre de transformer la logique de sortie en un signal analogique et un circuit logique côté signal de sortie (2b') réalisé sous la forme d'une interface pour transmettre une logique de sortie correspondant au décodeur.

4. Dispositif de commande de communication de véhicule (100) conforme à l'une quelconque des revendications 1 à 3, dans lequel les moyens de séparation de signaux comportent le séparateur numérique pour permettre la séparation de signaux à haute vitesse (104) et un élément pour permettre la séparation de signaux à basse vitesse.

5. Dispositif de commande de communication de véhicule (100) conforme à la revendication 4, dans lequel l'élément permettant la séparation de signaux à basse vitesse comporte un photo-coupleur (111).

6. Dispositif de commande de communication de véhicule (100) conforme à l'une quelconque des revendications 1 à 5, dans lequel les moyens de prévention d'une sortie erronée comportent un circuit logique (115, 116) susceptible de commander la sortie des moyens de séparation de signaux vers le côté haute tension et/ou le côté basse tension de ces moyens pour la transférer vers une sortie de sécurité prédéfinie ou une sortie située dans une plage de sécurité prédéfinie.

7. Dispositif de commande de communication de véhicule (100) conforme à l'une quelconque des revendications 1 à 6, dans lequel les moyens de prévention d'une sortie erronée comportent une résistance de décalage vers le haut ou vers le bas susceptible de fixer la tension d'une cible de détection à une tension prédéterminée en décalant vers le haut ou vers le bas cette tension de la cible de détection lorsque la tension détectée par les moyens de surveillance de la tension tombe à une valeur située à l'extérieur d'une plage prédéfinie.

8. Dispositif de commande de communication de véhicule (100) conforme à l'une quelconque des revendications 1 à 7, dans lequel les moyens de transmission/réception sont un émetteur-récepteur CAN (29).

9. Dispositif de commande de communication de véhicule (100) conforme à l'une quelconque des revendications 1 à 8, dans lequel l'équipement électrique monté sur le véhicule comprend un moteur (107, 13) pour commander un compresseur électrique et le dispositif de commande d'opération de l'équipement électrique monté sur le véhicule comprend un inverseur (106, 40).

10. Dispositif de commande de communication de véhicule (100) conforme à l'une quelconque des revendications 1 à 9, dans lequel le dispositif de commande d'opération de l'équipement électrique monté sur le véhicule comporte un élément choisi dans le groupe formé par un inverseur (106, 40) pour commander les roues du véhicule, un dispositif de commande d'opération pour une commande de puissance électrique, un dispositif de commande de batterie ou un convertisseur DC-DC.
